# EUROPÄISCHE PATENTANMELDUNG

(11) **EP 4 592 452 A1**
(43) Veröffentlichungstag der Anmeldung: **30.07.2025**
(21) Anmeldenummer: 25154019.1
(22) Anmeldetag: 27.01.2025
(51) Int. Cl.: E01C 19/40, E01C 19/42, E01C 19/48, B62D 7/02, B62D 11/20, B65G 23/44, B65G 41/00

(54) **GLEITSCHALUNGSFERTIGER**

(30) Priorität: 26.01.2024 DE 102024102291
(71) Anmelder: Wirtgen GmbH, 53578 Windhagen (DE)
(72) Erfinder: Verhaelen, Philip, 53797 Lohmar (DE); Engels, Michael, 56410 Montabaur (DE); Schenkelberg, Kevin, 56244 Hartenfels (DE)
(74) Vertreter: dompatent von Kreisler Selting Werner - Partnerschaft von Patent- und Rechtsanwälten mbB

(57) **Zusammenfassung**

Bei einem Gleitschalungsfertiger (1), mit zumindest einem Maschinenrahmen (2), zumindest drei Fahreinrichtungen (4), die mit dem Maschinenrahmen (2) verbunden sind, zumindest einer Förderbandeinrichtung (6), die mit dem Maschinenrahmen (2) derart verbunden ist, dass die Förderbandeinrichtung (6) relativ zu dem Maschinenrahmen (2) zumindest um eine im Wesentlichen horizontale Achse und zumindest um eine im Wesentlichen vertikale Achse schwenkbar, wobei die Förderbandeinrichtung zumindest ein erstes Ende und zumindest ein zweites Ende aufweist, wobei die Förderbandeinrichtung zumindest eine Förderbandbasis und zumindest ein an der Förderbandbasis angeordnetes Förderband aufweist, wobei das Förderband um zumindest eine erste Umlenkrolle an dem ersten Ende der Förderbandeinrichtung und zumindest um eine zweite Umlenkrolle an einem zweiten Ende der Förderbandeinrichtung umläuft, zumindest ein erster Aktuator (22), der derart angeordnet und ausgebildet ist, dass die Förderbandeinrichtung (6) zumindest um die im Wesentlichen horizontale Achse (19) schwenkbar ist, zumindest ein zweiter Aktuator (24, 34), der derart angeordnet und ausgebildet ist, dass die Förderbandeinrichtung (6) zumindest um die im Wesentlichen vertikale Achse (36) schwenkbar ist, ist vorgesehen, dass zumindest eine Verstelleinrichtung vorgesehen ist, die derart ausgebildet ist, dass das erste und das zweite Ende der Förderbandeinrichtung in Längsrichtung der Förderbandeinrichtung verstellbar sind.

## Beschreibung

Die Erfindung betrifft einen Gleitschalungsfertiger nach Anspruch 1, sowie ein Verfahren zum Herstellen von Bodenbelägen oder Strukturen mit Hilfe von Gleitschalungsfertigern nach Anspruch 13.

Gleitschalungsfertiger, wie beispielsweise aus der DE 199 57 048 bekannt, verfügen üblicherweise über einen Maschinenrahmen, Fahreinrichtungen, die mit diesem Maschinenrahmen verbunden sind, sowie mindestens eine Förderbandeinrichtung. Die Förderbandeinrichtung ermöglicht es, Materialien wie Beton zu einer Arbeitseinrichtung zu transportieren. Mit der Arbeitseinrichtung ist es möglich, Bodenbeläge oder Strukturen zu erzeugen. Die Arbeitseinrichtung kann beispielsweise eine Betonmulde sein und kann sowohl austauschbar als auch in ihrer Position veränderbar oder erweiterbar sein. Des Weiteren sind die Fahreinrichtungen üblicherweise so mit dem Maschinenrahmen verbunden, dass sie ihre Position relativ zum Maschinenrahmen verändern können.

Die zumindest eine Förderbandeinrichtung kann mit dem Maschinenrahmen derart verbunden sein, dass die Förderbandeinrichtung relativ zu dem Maschinenrahmen zumindest um eine im Wesentlichen horizontale Achse und zumindest um eine im Wesentlichen vertikale Achse schwenkbar ist. Die Förderbandeinrichtung kann zumindest ein erstes Ende und zumindest ein zweites Ende aufweisen, wobei die Förderbandeinrichtung zumindest eine Förderbandbasis und zumindest ein an der Förderbandbasis angeordnetes Förderband aufweist, wobei das Förderband um zumindest eine erste Umlenkrolle an dem ersten Ende der Förderbandeinrichtung und zumindest um eine zweite Umlenkrolle an einem zweiten Ende der Förderbandeinrichtung umläuft. Zumindest ein erster Aktuator kann derart angeordnet und ausgebildet ist, dass die Förderbandeinrichtung zumindest um die im Wesentlichen horizontale Achse schwenkbar ist, und zumindest ein zweiter Aktuator kann derart angeordnet und ausgebildet ist, dass die Förderbandeinrichtung zumindest um die im Wesentlichen vertikale Achse schwenkbar ist.

Die Förderbandeinrichtung kann einen Materialaufnahmebereich zur Aufnahme von Beton aufweisen. Der Beton wird dann über die Förderbandeinrichtung zur Arbeitseinrichtung, insbesondere zur Betonmulde transportiert, mit der der Bodenbelag oder die Struktur hergestellt wird.

Bei den bekannten Gleitschalungsfertigern besteht häufig das Problem, dass sich die Position des Materialaufnahmebereichs und/oder die Position der Arbeitseinrichtung verändert oder die Arbeitseinrichtung selbst ausgetauscht wird. Es besteht somit zunehmend Bedarf, die Bedienung der Fördereinrichtung zu vereinfachen.

Aufgabe der vorliegenden Erfindung ist es daher, einen Gleitschalungsfertiger und ein Verfahren zum Herstellen von Bodenbelägen oder Strukturen mit Hilfe von Gleitschalungsfertigen zu schaffen, die bzw. das die Bedienung des gesamten Gleitschalungsfertigers, insbesondere die Bedienung der Fördereinrichtung vereinfacht.

Die Erfindung sieht in vorteilhafter Weise vor, dass zumindest eine Verstelleinrichtung vorgesehen ist, die derart ausbildet ist, dass das erste und das zweite Ende der Förderbandeinrichtung in Längsrichtung der Förderbandeinrichtung verstellbar sind.

Die Verstelleinrichtung kann somit sowohl das erste als auch das zweite Ende der Förderbandeinrichtung verstellen. Dies bedeutet nicht, dass immer sowohl das erste als auch das zweite Ende der Förderbandeinrichtung verstellt werden. Je nach Anwendungsfall kann die Verstelleinrichtung nur das erste Ende oder das zweite Ende oder beide Enden verstellen. Die Verstellung kann dabei gleichzeitig oder auch nacheinander erfolgen.

Die Längsrichtung der Förderbandeinrichtung entspricht der Längsrichtung des Förderbandes. Die Längsrichtung der Förderbandeinrichtung oder die Längsrichtung des Förderbandes verlaufen vorzugsweise parallel zu der Transportrichtung der Förderbandeinrichtung.

Die vorliegende Erfindung hat damit den Vorteil, dass die Förderbandeinrichtung sehr gut an die Umgebung und den Anwendungsfall angepasst werden kann. Es kann erforderlich sein, die Position des Materialaufnahmebereichs anzupassen, insbesondere wenn das Material aufgrund verschiedener Anforderungen an unterschiedlichen Stellen aufgebracht werden muss. Ebenso ist es möglich, dass sich die Position der Arbeitseinrichtung verändert, bzw. der Wechsel der Arbeitseinrichtung eine Umpositionierung der Fördereinrichtung notwendig macht. Diese Anpassungsfähigkeit macht die Förderbandeinrichtung besonders flexibel in ihrer Anwendung.

Die Verstelleinrichtung kann derart ausgebildet sein, dass das erste und das zweite Ende unabhängig voneinander in Längsrichtung der Förderbandeinrichtung verstellbar sind.

Das erste und das zweite Ende können beispielsweise in unterschiedliche Richtungen verstellt werden oder auch um unterschiedliche Beträge in die gleiche Richtung verstellt werden.

Die Verstelleinrichtung kann derart ausgebildet sein, dass die Förderbandbasis und damit die Förderbandeinrichtung in Längsrichtung der Förderbandeinrichtung in Bezug zum Maschinenrahmen verstellbar ist, und dass der Abstand zwischen der ersten Umlenkrolle am ersten Ende der Förderbandeinrichtung und der zweiten Umlenkrolle am zweiten Ende der Förderbandeinrichtung verstellbar ist.

Durch die Verstellung der Förderbandbasis kann die gesamte Förderbandeinrichtung in Längsrichtung der Förderbandeinrichtung in Bezug zum Maschinenrahmen verstellt werden.

Durch Verstellen des Abstands zwischen der ersten Umlenkrolle am ersten Ende der Förderbandeinrichtung und der zweiten Umlenkrolle am zweiten Ende der Förderbandeinrichtung kann die Transportlänge des Förderbands verstellt werden.

Die Verstelleinrichtung kann derart ausgebildet sein, dass sowohl die Verstellung der Förderbandbasis möglich ist als auch die Verstellung der Transportlänge des Förderbandes. Dies bedeutet nicht, dass immer beides verstellt werden muss. Es kann unter bestimmten Bedingungen lediglich die Förderbandbasis verstellt werden oder die Förderbandlänge.

Andererseits kann auch beides gleichzeitig oder nacheinander verstellt werden.

Die Verstelleinrichtung kann derart ausgebildet sein, dass die erste und/oder die zweite Umlenkrolle in Bezug zur Förderbandbasis verstellbar ist, so dass der Abstand zwischen der ersten Umlenkrolle am ersten Ende der Förderbandeinrichtung und/oder der zweiten Umlenkrolle am zweiten Ende der Förderbandeinrichtung verstellbar ist.

Die Verstelleinrichtung kann zumindest einen ersten Verstellaktuator und zumindest einen zweiten Verstellaktuator aufweisen.

Der erste Verstellaktuator kann derart angeordnet und ausgebildet sein, dass die Förderbandbasis und damit die Förderbandeinrichtung in Längsrichtung der Förderbandeinrichtung in Bezug zum Maschinenrahmen mittels des ersten Verstellaktuators verstellbar ist. Der zweite Verstellaktuator kann derart angeordnet und ausgebildet sein, dass der Abstand zwischen der ersten Umlenkrolle am ersten Ende der Förderbandeinrichtung und der zweiten Umlenkrolle am zweiten Ende der Förderbandeinrichtung mittels des zweiten Verstellaktuators verstellbar ist.

Mittels des ersten Verstellaktuators kann somit die Förderbandbasis verstellt werden. Mittels des zweiten Verstellaktuators kann die Länge des Förderbands verstellt werden.

Alternativ kann auch vorgesehen sein, dass nicht die Förderbandbasis verstellbar ausgebildet ist, sondern der erste Verstellaktuator die erste Umlenkrolle in Bezug zur Förderbandbasis verstellt und der zweite Verstellaktuator die zweite Umlenkrolle in Bezug zur Förderbandbasis verstellt. Dadurch kann der Abstand zwischen der ersten und der zweiten Umlenkrolle verstellt werden oder die erste und die zweite Umlenkrolle können um die gleichen Beträge in die gleiche Richtung verstellt werden.

Bei einer weiteren Alternative kann die Verstelleinrichtung auch nur einen Verstellaktuator aufweisen. In diesem Fall könnte zunächst mit dem Verstellaktuator die Förderbandbasis verstellt werden. Hierzu könnte die Verstellmöglichkeit des Abstandes zwischen der ersten und der zweiten Umlenkrolle festgestellt werden, und es könnte mit der Verstelleinrichtung lediglich die Förderbandbasis verstellt werden. Die Förderbandbasis könnte dann in Bezug zum Maschinenrahmen festgestellt werden, und es könnte mit dem einen Aktuator der Verstelleinrichtung dann mit der festgestellten Förderbandbasis nur noch zumindest eine Umlenkrolle verstellt werden. So könnte auch lediglich mit einem Verstellaktuator beide Verstellungen, nämlich zum einen die Verstellung der Förderbandbasis in Bezug zum Maschinenrahmen und andererseits die Verstellung des Abstandes zwischen der ersten und der zweiten Umlenkrolle erfolgen.

Es können auch mindestens zwei erste Verstellaktuatoren und/oder mindestens zwei zweite Verstellaktuatoren vorgesehen sein.

Zumindest zwei Verstellaktuatoren vorzusehen, kann z.B. vorteilhaft sein, wenn die beiden Verstellaktuatoren an den Seiten des Förderbands vorgesehen sind und somit die Kraft gleichmäßig verteilt ist und es nicht zum Verkanten beim Verstellen der Förderbandeinrichtung kommt.

Der zweite Verstellaktuator kann derart angeordnet und ausgebildet sein, dass die erste und/oder die zweite Umlenkrolle in Bezug zur Förderbandbasis verstellbar ist, so dass der Abstand zwischen der ersten Umlenkrolle am ersten Ende der Förderbandeinrichtung und der zweiten Umlenkrolle am zweiten Ende der Förderbandeinrichtung verstellbar ist.

Der zweite Verstellaktuator kann somit derart angeordnet und ausgebildet sein, dass die erste und/oder zweite Umlenkrolle in Bezug zur Förderbandbasis verstellbar ist, so dass die Länge des Förderbandes verstellbar ist.

Die zumindest eine Umlenkrolle kann angetrieben sein, so dass die Umlenkrolle das umlaufende Förderband antreiben kann. Zusätzlich zu der ersten und zweiten Umlenkrolle kann mindestens eine dritte und eine vierte Umlenkrolle vorgesehen sein, um die das Förderband verläuft, wobei mindestens die dritte Umlenkrolle derart verstellbar sein kann, dass das Förderband auch bei Verstellen des Abstandes zwischen der ersten Umlenkrolle und der zweiten Umlenkrolle stets eine vorgegebene Spannung aufweist. Die vorgegebene Spannung ist vorzugsweise eine solche Spannung, bei der die Funktion des Förderbandes gewährleistet ist. Ferner kann anstelle der zumindest einen ersten und/oder der zumindest einen zweiten Umlenkrolle zusätzlich oder alternativ die dritte und/oder die vierte Umlenkrolle angetrieben sein.

Die dritte Umlenkrolle kann dabei um den gleichen Abstand verstellt werden, wie die erste oder die zweite Umlenkrolle. Wenn die erste und die zweite Umlenkrolle gleichzeitig verstellt werden, so wird die dritte Umlenkrolle vorzugsweise um den Betrag verstellt, um den sich der Abstand zwischen der ersten und zweiten Umlenkrolle verändert. Die dritte Umlenkrolle wird stets so verstellt, dass die Spannung des Förderbandes vorzugsweise im Wesentlichen gleichbleibt.

Der maximale Abstand zwischen der ersten und der zweiten Umlenkrolle können gegenüber dem minimalen Abstand zwischen der ersten und zweiten Umlenkrolle 130 % bis 200 %, vorzugsweise 140% bis 160%, betragen.

Es kann somit die maximale Transportlänge Förderbandeinrichtung gegenüber der minimalen Transportlänge der Förderbandeinrichtung zwischen 130 % bis 200 %, vorzugsweise 140% bis 160%, betragen.

Die zumindest eine Förderbandeinrichtung kann relativ zu dem Maschinenrahmen entlang einer im Wesentlichen vertikalen Achse in der Höhe verstellbar sein.

Dies hat den Vorteil, dass die Förderbandeinrichtung noch flexibler einstellbar ist.

Die zumindest eine Förderbandeinrichtung kann relativ zu dem Maschinenrahmen, vorzugsweise mittels einer Parallelogrammführung, in einer horizontalen Ebene bewegbar sein.

Das Förderband kann ein Obertrum und ein Untertrum aufweisen. Der Obertrum kann auch als Lasttrum bezeichnet werden. Dies ist der obere Teil des Förderbands, auf dem das zu transportierende Material liegt. Es bewegt sich von der Beladestelle zur Entladestelle und trägt die Last des Materials. Das Obertrum wird vorzugsweise durch eine Reihe von Stützflächen oder auch Tragflächen unterstützt, die dafür sorgen, dass das Band unter der Last des Materials nicht durchhängt. Alternativ kann das Förderband auch durch Stützrollen anstelle von Stützfläche unterstützt sein.

Das Untertrum, auch Leertrum genannt, ist der untere Teil des Förderbands, der zurück zur Beladestelle läuft, nachdem das Material abgeworfen wurde. Es trägt keine Last außer dem Eigengewicht des Bands und eventuellen Resten von transportiertem Material, die nicht abgeworfen wurden. Die zumindest eine dritte und zumindest eine vierte Umlenkrollen sind vorzugsweise am Untertrum angeordnet.

Erfindungsgemäß kann ein Verfahren zum Herstellen von Bodenbelägen oder Strukturen mit Hilfe von einem Gleitschalungsfertiger vorgesehen sein, der zumindest einen Maschinenrahmen aufweist, mit dem zumindest eine Förderbandeinrichtung verbunden ist, wobei die Förderbandeinrichtung relativ zu dem Maschinenrahmen zumindest um eine im Wesentlichen horizontale Achse und zumindest um eine im Wesentlichen vertikale Achse verschwenkbar ist, wobei die Förderbandeinrichtung zumindest ein erstes Ende und zumindest ein zweites Ende aufweist. Die Förderbandeinrichtung weist zumindest eine Förderbandbasis und zumindest einen an der Förderbandbasis angeordnetes Förderband auf, wobei das Förderband zumindest um eine erste Umlenkrolle an dem ersten Ende der Förderbandeinrichtung und zumindest um eine zweite Umlenkrolle an dem zweiten Ende der Förderbandeinrichtung umlaufen kann, wobei zumindest ein erster Aktuator die Förderbandeinrichtung zumindest um die horizontale Achse verschwenken kann, wobei zumindest ein zweiter Aktuator die Förderbandeinrichtung zumindest um eine vertikale Achse verschwenken kann. Es ist in vorteilhafter Weise vorgesehen, dass das erste und das zweite Ende der Förderbandeinrichtung in Längsrichtung des Förderbandes mittels einer Verstelleinrichtung verstellt werden kann.

Das erste und das zweite Ende können unabhängig voneinander in Längsrichtung der Förderbandeinrichtung mittels der Verstelleinrichtung verstellt werden.

Das erste und das zweite Ende können zeitgleich oder nacheinander verstellt werden.

Im Folgenden wird unter Bezugnahme auf die Zeichnungen ein Ausführungsbeispiel der vorliegenden Erfindung näher erläutert.

Es zeigen schematisch:
- Fig. 1: eine Draufsicht auf einen Gleitschalungsfertiger,
- Fig. 2: eine perspektive Ansicht einer Förderbandeinrichtung,
- Fig. 3: eine Seitenansicht der Förderbandeinrichtung als Fig. 2,
- Fig. 4.: die Förderbandeinrichtung aus Fig 3 mit verstellter Förderbandbasis,
- Fig. 5: die Förderbandeinrichtung mit verlängerter Transportlänge des Förderbandes
- Fig. 6: Verstellung des Förderbands der Förderbandeinrichtung,
- Fig. 7: Alternative zu Fig. 5,
- Fig. 8: weitere Alternative zu Fign. 5 und 6
- Fig. 9: eine Ansicht auf die Aufhängung der Förderbandeinrichtung von unten,
- Fig. 10: eine Ansicht auf die Aufhängung der Förderbandeinrichtung gemäß Fig. 4 in Draufsicht, und
- Fig. 11: eine perspektivische Ansicht auf die Förderbandeinrichtung,
- Fig. 12: das Ausführungsbeispiel aus Fig.11 ohne Förderband.

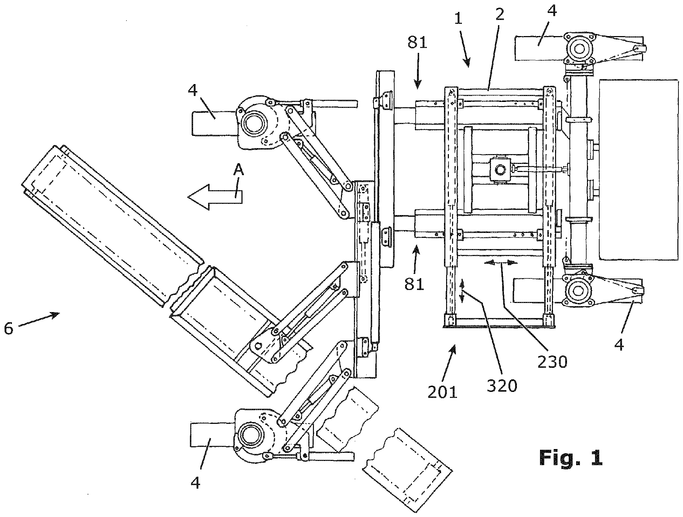

Fig. 1 zeigt einen Gleitschalungsfertiger 1. Mit einem Gleitschalungsfertiger können Bodenbeläge oder Strukturen hergestellt werden. Der Gleitschalungsfertiger 1 kann sich in Arbeitsrichtung A bewegen.

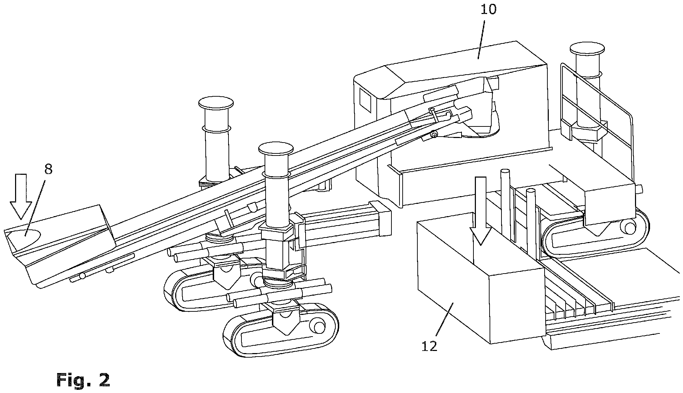

Der Gleitschalungsfertiger 1 weist zumindest einen Maschinenrahmen 2 auf. Mit dem Maschinenrahmen 2 sind Fahreinrichtungen 4 verbunden. Ferner ist zumindest eine Förderbandeinrichtung 6 vorgesehen. Mittels der Förderbandeinrichtung 6 kann z.B. Beton zu einer Arbeitseinrichtung 12 (Fig. 2) transportiert werden. Mittels der Arbeitseinrichtung können Bodenbeläge oder Strukturen hergestellt werden. Die Arbeitseinrichtung kann beispielsweise eine Betonmulde sein. Die Arbeitseinrichtung kann austauschbar und auch in der Position veränderbar sein oder sie kann zusätzlich oder alternativ verbreitert werden. Die Fahreinrichtungen 4 können derart mit dem Maschinenrahmen verbunden sein, dass sie ihre Position bezogen auf den Maschinenrahmen verändern können.

In Fig. 1 ist ein Gleitschalungsfertiger 1 dargestellt, bei dem die Längsträger 81 des Maschinenrahmens 2 längenveränderlich sind. Ferner weist der Maschinenrahmen 2 auch eine Maschinenrahmenteil 201 auf, der in Längsrichtung 230 und Querrichtung 320 längenveränderlich ist. An diesen Maschinenrahmenteil 201 können verschiede Arbeitseinrichtung 12, z.B. verschieden geformte Betonmulden, angebracht werden. Mit Hilfe des Maschinenrahmenteils 201 können diese relativ zu den Fahrwerken 4 und insbesondere relativ zur Förderbandeinrichtung 6 unterschiedlich positioniert werden.

Mit Hilfe der Förderbandeinrichtung 6 kann Material aufgenommen werden und in die Arbeitseinrichtung 12 befördert werden, mit der die Fahrbahn oder Strukturen hergestellt werden.

In Fig. 2 ist die Förderbandeinrichtung 6 genauer dargestellt, bei der das Material an der Materialaufnahme 8 aufgenommen wird und an der Stelle 10 in die als Betonmulde ausgebildete Arbeitseinrichtung 12 eingebracht wird.

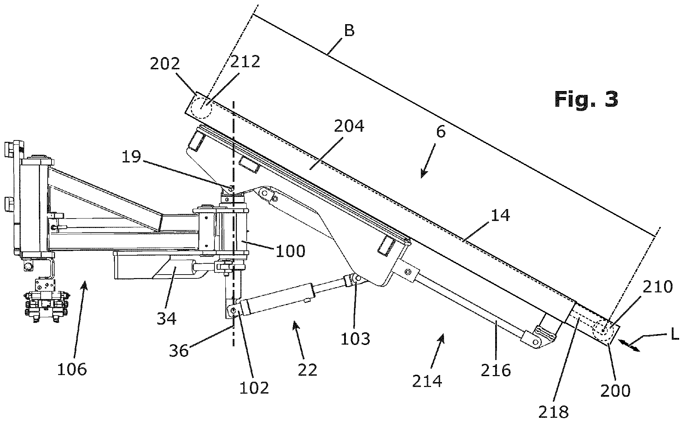

In Fig. 3 ist die Förderbandeinrichtung 6 näher dargestellt. Die Förderbandeinrichtung 6 weist ein Förderband 14 auf, das in Fig. 3 gezeigt ist. Das Förderband 14 und damit die Förderbandeinrichtung 6 kann mit Hilfe zumindest eines ersten Aktuators 22 um eine im Wesentlichen horizontale Schwenkachse 19 verschwenkt werden. Ferner kann die Fördereinrichtung 6 mit Hilfe eines zweiten Aktuators 34 um eine im Wesentlichen vertikale Schwenkachse 36 verschwenkt werden. Die Schwenkachs 19 ist vorzugsweise unterhalb des Förderbandes 14 angeordnet. Die Schwenkachse 19 kann wie im Ausführungsbeispiel dargestellt im oberen Drittel der Fördereinrichtung 6 angeordnet sein. In einer weiteren bevorzugten Ausführungsform kann die Schwenkachse 19 im Bereich des mittleren Drittels der Fördereinrichtung 6 angeordnet sein. Der dargestellte erste Aktuator 22 ist im dargestellten Ausführungsbeispiel an einem Verbindungselement 100 um eine Schwenkachse 102 schwenkbar gelagert. Das Verbindungselement 100 ist an einer Parallelogrammführung 106 angeordnet. Der erste Aktuator 22 ist ferner an einem zweiten Ende ebenfalls schwenkbar um eine Schenkachse 103 gelagert. Die Förderbandeinrichtung 6 kann auch in der Höhe entlang der im Wesentlichen vertikalen Achse 36 manuell oder mithilfe eines weiteren Aktuators translatorisch beweglich sein.

Die Förderbandeinrichtung weist zumindest ein erstes Ende 200 und ein zweites Ende 202 auf. Ferner weist die Förderbandeinrichtung 6 zumindest eine Förderbandbasis 204 und zumindest das an der Förderbandbasis 204 angeordnetes Förderband 14 auf. Das Förderband 14 verläuft um zumindest eine erste Umlenkrolle 210 an dem ersten Ende 200 der Förderbandeinrichtung 6 und zumindest um eine zweite Umlenkrolle 212 am zweiten Ende 202 der Förderbandeinrichtung 6. Es ist zumindest eine Verstelleinrichtung 214 vorgesehen, die derart ausgebildet ist, dass das erste und das zweite Ende 200, 202 der Förderbandeinrichtung 6 in Längsrichtung L der Förderbandeinrichtung 6 verstellbar sind. Die Längsrichtung der Förderbandeinrichtung 6 ist auch die Längsrichtung L des Förderbandes 14.

Das erste und das zweite Ende 200, 202 können unabhängig voneinander in Längsrichtung L der Förderbandeinrichtung 6 verstellbar sein.

Die Verstelleinrichtung 214 kann derart ausgebildet sein, dass einerseits die Förderbandbasis 204 und damit die Förderbandeinrichtung 6 in Längsrichtung L der Förderbandeinrichtung 6 in Bezug zum Maschinenrahmen 2 verstellbar ist, und andererseits, dass der Abstand B zwischen der ersten Umlenkrolle 210 und der zweiten Umlenkrolle 212 verstellbar ist. Durch Verstellen des Abstandes zwischen der ersten Umlenkrolle 210 und der zweiten Umlenkrolle 212 kann die Länge der Transportlänge des Förderbandes 14 verstellt werden.

Im dargestellten Ausführungsbeispiel kann die Verstelleinrichtung 214 einen ersten Verstellaktuator 216 und zumindest einen zweiten Verstellaktuator 218 aufweisen.

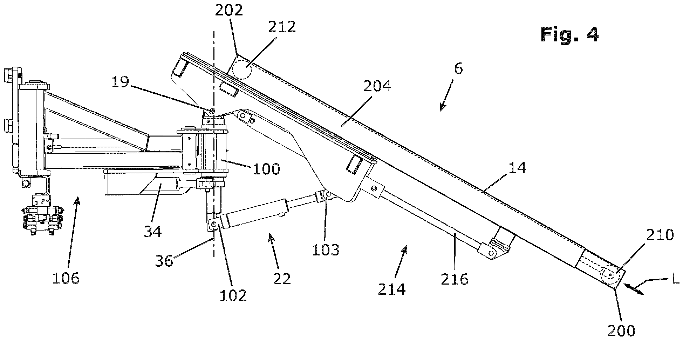

Der erste Verstellaktuator 216 kann derart angeordnet und ausgebildet sein, dass die Förderbandbasis 204 und damit die Förderbandeinrichtung 6 in Längsrichtung L der Förderbandeinrichtung 6 in Bezug zum Maschinenrahmen 2 mittels des ersten Verstellaktuators 216 verstellbar ist. In Fig. 4 ist das Ausführungsbeispiel aus Fig. 3 dargestellt, bei dem die Förderbandbasis 204 und damit die Förderbandeinrichtung 6 in Längsrichtung L der Förderbandeinrichtung 6 in Bezug zum Maschinenrahmen 2 mittels des ersten Verstellaktuators 216 verstellt worden ist.

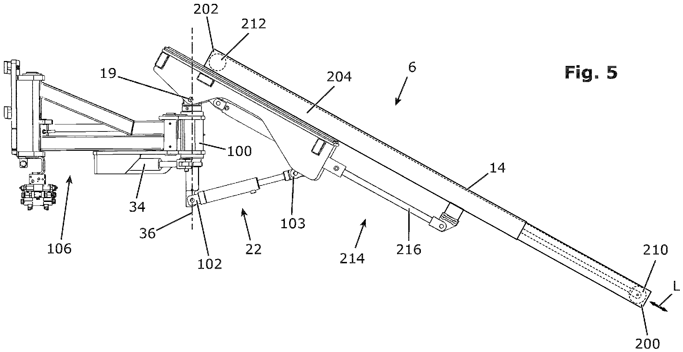

Der zweite Verstellaktuator 218 kann derart angeordnet und ausgebildet sein, dass der Abstand zwischen der ersten Umlenkrolle 210 am ersten Ende 200 und der zweiten Umlenkrolle 212 am zweiten Ende 202 mittels des zweiten Verstellaktuators 218 verstellbar ist. In Fig. 5 ist das Ausführungsbeispiel aus Fig. 4 darstellt, bei dem der Abstand zwischen der ersten Umlenkrolle 210 am ersten Ende 200 und der zweiten Umlenkrolle 212 am zweiten Ende 202 mittels des zweiten Verstellaktuators 218 verstellt worden ist.

Es können mittels der Verstelleinrichtung 214 zwei verschiedene Verstellungen ausgeführt werden. Einerseits kann die Förderbandbasis 204 in Bezug zum Maschinenrahmen 2 in Längsrichtung L der Förderbandeinrichtung 6 verstellt werden. Andererseits kann der Abstand zwischen der ersten und der zweiten Umlenkrolle 210, 212 verstellt werden. Mit dem Abstand zwischen der ersten Umlenkrolle 210 und der zweiten Umlenkrolle 212 kann die Transportlänge des Förderbandes 6 verstellt werden.

Somit kann einerseits die Förderbandbasis 204 in Bezug zum Maschinenrahmen 2 mittels der Verstelleinrichtung 214 verstellt werden und andererseits die Transportlänge des Förderbands 6 mittels der Verstelleinrichtung 214 verstellt werden.

Damit kann das erste Ende 200 der Förderbandeinrichtung 6 und das zweite Ende 202 der Förderbandeinrichtung 6 verstellt werden. Das Erste Ende 200 und das zweite Ende 202 können unabhängig voneinander verstellt werden.

Die erste Umlenkrolle 210 und/oder die zweite Umlenkrolle 212 können in Bezug zur Förderbandbasis 204 verstellt werden. In einem nicht dargestellten Ausführungsbeispiel kann die Verstelleinrichtung 214 auch nur einen Verstellaktuator aufweisen. In diesem Fall könnte zunächst mit dem Verstellaktuator, der beispielsweise der Verstellaktuator 216 sein könnte, die Förderbandbasis 204 verstellt werden. Hierzu könnte die Verstellmöglichkeit des Abstandes zwischen der ersten und der zweiten Umlenkrolle 210, 212 festgestellt werden, und es könnte mit der Verstelleinrichtung 214 lediglich die Förderbandbasis 204 verstellt werden. Die Förderbandbasis 204 könnte andererseits in Bezug zum Maschinenrahmen 2 festgestellt werden, und es könnte mit dem einen Aktuator der Verstelleinrichtung dann mit der festgestellten Förderbandbasis 204 nur noch zumindest eine Umlenkrolle verstellt werden.

Auf diese Weise könnte lediglich mit einem Verstellaktuator beide Verstellungen, nämlich zum einen die Verstellung der Förderbandbasis 204 in Bezug zum Maschinenrahmen 2 und andererseits die Verstellung des Abstandes zwischen der ersten und der zweiten Umlenkrolle 210, 212 erfolgen.

Bei einer weiteren nicht dargestellten Ausführungsform könnte die Verstelleinrichtung 214 zwei Verstellaktuatoren aufweisen, die jeweils das ersten und das zweiten Ende in Bezug zur Förderbandbasis verstellen können, wobei die Förderbandbasis im Bezug zum Maschinenrahmen nicht in Längsrichtung der Förderbandeinrichtung verstellt wird. Auf diese Weise kann die Verstelleinrichtung auch das erste und das zweite Ende verstellen.

Es kann zumindest eine Umlenkrolle angetrieben sein. Es könnte beispielsweise die Umlenkrolle 212 sein. Diese kann dann das Förderband 6 antreiben, so dass es die Umlenkrollen 210, 212 umläuft.

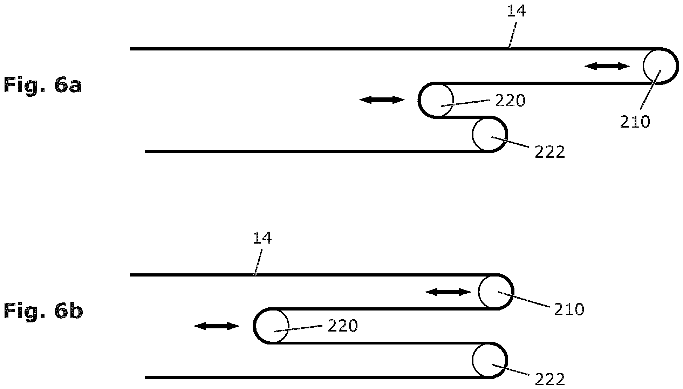

Figuren 6a, 6b, 7 und 8 zeigen eine Verstellung der Förderbandeinrichtung 6. Es ist dabei die Förderbandeinrichtung 6 nur schematisch dargestellt. Es ist ferner nur die erste Seite 200 der Förderbandeinrichtung 6 dargestellt. Ferner ist nur das Förderband 14 und ein Teil der Umlenkrollen dargestellt. Alles andere ist zur Vereinfachung weggelassen worden. An der ersten Seite 200 läuft das Förderband 14 um die erste Umlenkrolle 210. Die Umlenkrolle kann mit Hilfe des in den Fig. 3 bis 5 dargestellten Verstellaktuators 218 verstellt werden. Damit kann der Abstand zwischen der ersten Umlenkrolle 210 und der in den Fig. 6a bis 8 nicht dargestellten zweiten Umlenkrolle 212 verstellt werden. Damit wird die Transportlänge des Förderbandes, das sich zwischen der ersten und der zweiten Umlenkrolle 210, 212 erstreckt, verändert.

Es kann ferner wie in den Figuren 6a, 6b, 7 und 8 dargestellt eine dritte Umlenkrolle 220 und eine vierte Umlenkrolle 222 vorgesehen. Wenn die erste Umlenkrolle 210 mit Hilfe des in den Fig. 3 bis 5 dargestellten Verstellaktuators 218 bewegt wird, kann auch die dritte Umlenkrolle 220 bewegt werden, und zwar um einen solchen Betrag, dass das Förderband 14 stets die gleiche Spannung aufweist. Sofern die erste Umlenkrolle 210 in Bezug zur zweiten Umlenkrolle 212 bewegt wird, und zwar um einen Betrag X, kann die dritte Umlenkrolle 220 um den gleichen Betrag X in die gleiche Richtung bewegt werden. Auf diese Weise kann sichergestellt werden, dass das Förderband 14 stets mit der im Wesentlichen gleichbleibenden Spannung um die Umlenkrollen umläuft.

In Fig. 6b ist das Ausführungsbeispiel gemäß Fig. 6 a dargestellt, lediglich mit verstellter erster Umlenkrolle 210 und damit auch verstellter dritter Umlenkrolle 220. Die Transportlänge des Förderbandes 14, die im Wesentlichen dem Abstand zwischen erster und zweiter Umlenkrolle 210, 212 entspricht, wurde in Fig. 6b verkleinert. Die dritte Umlenkrolle 220 wurde so verstellt, dass die Spannung des Förderbandes 14 im Wesentlichen gleich bleibt. Die Länge der vom Förderband 14 zu umlaufenden Strecke bleibt stets im Wesentlichen konstant. Eine im Wesentlichen konstante Länge der vom Förderband zu umlaufenden Strecke hat vorzugsweise eine im Wesentlichen konstante Spannung des Förderbandes 6 zur Folge. Eine im Wesentlichen konstante Spannung im Sinne dieser Anmeldung bedeutet, dass die Spannung wenigstens soweit aufrechterhalten wird, dass die Funktion des Förderbandes nicht beeinträchtigt. Das heißt, in jeder Verstellposition ist das Band weiterhin in der Lage Material zu fördern und es kommt insbesondere nicht zu einem Durchrutschen der Antriebsrollen gegenüber dem Förderband.

Es kann zum Verstellen der dritten Umlenkrolle 220 ein weiterer Verstellaktuator vorgesehen werden oder es kann auch der erste Verstellaktuator verwendet werden indem beispielsweise die dritte Umlenkrolle mechanisch mit der ersten Umlenkrolle 210 gekoppelt wird. Die vierte Umlenkrolle 222 wird im Bezug zur Förderbandbasis nicht verstellt. Die Positionen der dritten und vierten Umlenkrollen 220, 222 können selbstverständlich variieren. Es können sogar die Positionen der dritten und vierten Umlenkrolle getauscht werden, sofern sichergestellt wird, dass die dritte Umlenkrolle 220 derart bewegt wird, dass die Spannung des Förderbandes 14 im Wesentlichen konstant bleibt. Bei einem alternativen Ausführungsbeispiel können auch sowohl die dritte und als auch die vierte Umlenkrolle bewegt werden, wobei die beiden Umlenkrollen dann so bewegt werden, dass die Spannung des Förderbandes im Wesentlichen gleichbleibt. Bei einem solchen Ausführungsbeispiel könnten beispielsweise bei einer Verstellung der ersten Umlenkrolle 210 um den Betrag X die dritte Umlenkrolle 220 um den Betrag X/2 in die gleiche Richtung wie die erste Umlenkrolle 210 und die vierte Umlenkrolle 222 um den Betrag X/2 in die entgegensetzte Richtung zur ersten Umlenkrolle 210 und dritten Umlenkrolle 220 bewegt werden.

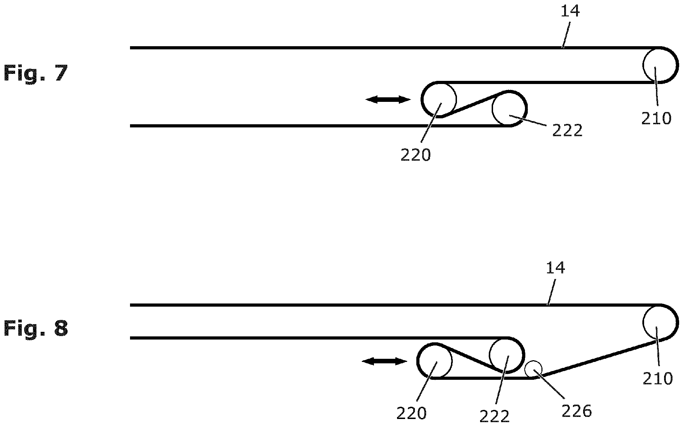

Fig. 7 zeigt ein alternatives Ausführungsbeispiel zu Fig. 6. Das Prinzip ist jedoch das gleiche wie in Fig. 6. Die Umlenkrolle 220 ist die dritte Umlenkrolle, die ebenfalls bewegt wird, wenn die erste Umlenkrolle 210 bewegt wird. Das dargestellte Ausführungsbeispiel in Fig. 7 ist lediglich etwas platzsparender.

Das Ausführungsbeispiel gemäß Fig. 8 funktioniert nach einem ähnlichen Prinzip wie die Ausführungsbeispiele aus Fig. 6 und 7. Die dritte Umlenkrolle 220 ist jedoch anders angeordnet. Das umlaufende Förderband 14 wird zunächst um eine Stützrolle 226 geführt und umläuft dann die dritte Umlenkrolle 220 und dann die vierte Umlenkrolle 222. Auch in diesem Ausführungsbeispiel kann die dritte Umlenkrolle 220 um den gleichen Betrag bewegt werden, wie die erste Umlenkrolle 210.

Alternativ kann anstelle der ersten Umlenkrolle 210 die zweite Umlenkrolle 212 mit einer den Ausführungsbeispielen der Figuren 6a, 6b 7, 8 entsprechenden Kinematik erfolgen.

Weiterhin ist es auch möglich, dass sowohl die erste Umlenkrolle 210 als auch die zweite Umlenkrolle 212 in Bezug zur Förderbandbasis 204 bewegt werden. In diesem Fall muss die dritte Umlenkrolle 220 um den Betrag bewegt werden, um den der Abstand zwischen der ersten und der zweiten Umlenkrolle 210, 212 sich vergrößert oder verkleinert. Sofern die erste und die zweite Umlenkrolle 210, 212 in Bezug zur Förderbandbasis 204 bewegt werden, könnte es auch passieren, dass die erste und die zweite Umlenkrolle 210, 212 um den Betrag in die gleiche Richtung verstellt werden. In diesem Fall müsste die dritte Umlenkrolle 220 nicht verstellt werden.

Grundsätzlich ist es auch möglich sowohl die erste Umlenkrolle 210 als auch die zweite Umlenkrolle 212 in Bezug zur Förderbandbasis 204 zu bewegen und für beide Umlenkrollen 210 und 212 eine eigene Kinematik gem. der Figuren 6, 7 und 8 vorzusehen.

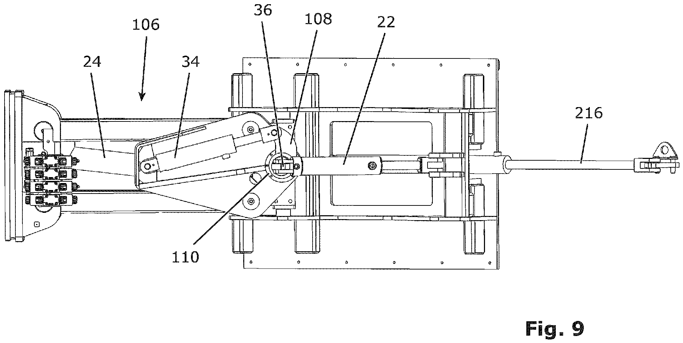

In Fig. 9 ist eine Ansicht auf die Aufhängung der Förderbandeinrichtung 6 von unten. Die Förderbandeinrichtung 6 selbst ist allerdings der Übersichtlichkeit halber nicht dargestellt. In der Ansicht ist der zumindest eine erste Aktuator 22 und der zumindest eine zweite Aktuator 34 dargestellt. Der erste Verstellaktuator 216 der Verstelleinrichtung 214 ist ferner auch zu erkennen.

Der zweite Aktuator 34 kann die Förderbandeinrichtung 6 um die vertikale Schwenkachse 36 verschwenken. Die Schwenkachse 36 schneidet vorzugsweise das Förderband 14. Ferner kann die Schwenkachse 36 durch die Schwenkachse 19 verlaufen. Dies kann auch Figur 4 entnommen werden. Der zweite Aktuator 34 ist im dargestellten Ausführungsbeispiel an einer ersten Seite mit einer Parallelogrammführung 106 verbunden. An einer zweiten Seite ist der zweite Aktuator 34 mit einem Verbindungslenker 108 schwenkbar verbunden, der wiederum mit einer Hohlsäule 110 verbunden ist, die mit der Förderbandeinrichtung 6 verbunden ist. Durch Betätigen und Aus bzw. Einfahren des zweiten Aktuators 34 kann die Hohlsäule 110 und damit die Fördereinrichtung 6 um die Schwenkachse 36 und damit um eine vertikale Achse verschwenkt werden.

Ferner ist der Figur 9 auch ein optionaler weitere Aktuator 24 dargestellt. Mit dem kann die gesamte Förderbandeinrichtung 6 mit der Parallelogrammführung 106 verstellt werden. Die Parallelogrammführung 106 ist an dem Maschinenrahmen 2 angeordnet.

Weist die Maschine den optionalen weiteren Aktuator 24 und die Parallelogrammführung 106 nicht auf kann die Achse 36 auch am Maschinenrahmen gelagert sein.

Horizontal im Sinne der vorliegenden Erfindung bedeutet nicht zwangsläufig horizontal in Bezug zu der Bodenoberfläche, aber horizontal zu einer durch die Längs- und Querachse des Maschinenrahmens definierte Ebene. Vertikal bedeutet vertikal in Bezug zu der durch die Längs- und Querachse des Maschinenrahmens definierte Ebene.

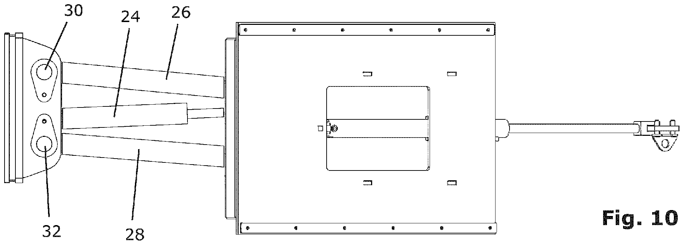

Fig. 10 zeigt eine Draufsicht auf die Aufhängung der Förderbandeinrichtung 6, allerdings ist zur Übersichtlichkeit die Förderbandeinrichtung 6 nicht dargestellt. In dieser Draufsicht ist der optionale weitere Aktuator 24 dargestellt. Der weitere Aktuator 24 kann die gesamte Förderbandeinrichtung 6 parallel verschwenken. Im vorliegenden Ausführungsbeispiel verschwenkt der optionale weitere Aktuator 24 die Förderbandeinrichtung 6 mit Hilfe der Parallelgrammführung 106. In Fig. 10 sind dabei die beiden Lenker 26 und 28 dargestellt, die jeweils um eine Drehachse 30 und 32 verschwenken.

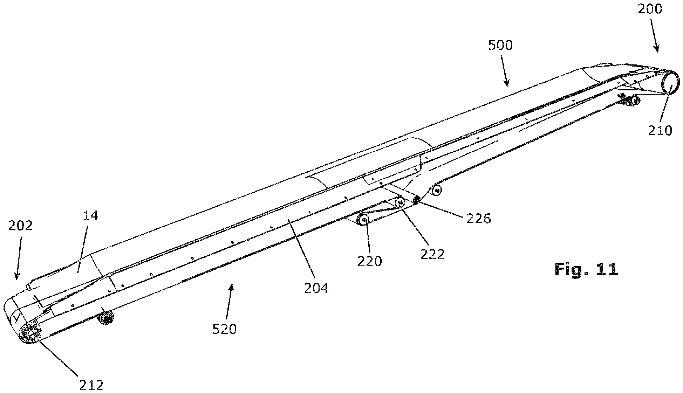

Fig. 11 zeigt eine perspektivische Ansicht auf die Förderbandeinrichtung 6 ohne Aufhängung. In der Fig. 11 sind das Förderband 14, die Förderbandbasis 204, das ersten und das zweite Ende 200, 202 sowie die erste, zweite, dritte und vierte Umlenkrolle 210, 212, 220, 222 dargestellt.

Die Kinematik entspricht dem Aufbau gemäß Ausführungsbeispiel Fig. 8

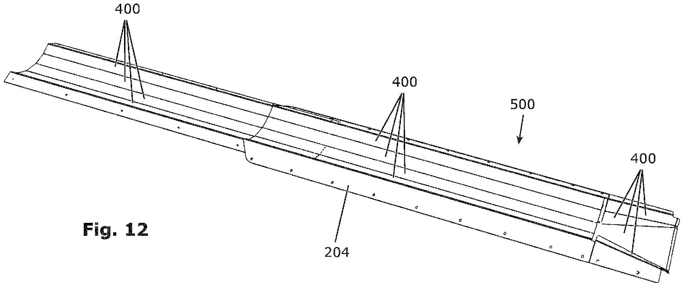

Wie in Fig. 11 dargestellt kann das Förderband ein Obertrum 500 und ein Untertrum 520 aufweisen. Der Obertrum 500 kann auch als Lasttrum bezeichnet werden. Dies ist der obere Teil des Förderbands 14, auf dem das zu transportierende Material liegt. Es bewegt sich von der Beladestelle zur Entladestelle und trägt die Last des Materials. Das Obertrum 500 wird, wie in Fig. 12 dargestellt, vorzugsweise durch eine Reihe von Stützflächen oder auch Tragflächen unterstützt, die dafür sorgen, dass das Band unter der Last des Materials nicht durchhängt. Alternativ kann das Förderband 14 auch durch Stützrollen anstelle von Stützfläche unterstützt sein. In Fig. 12 ist das Ausführungsbeispiel aus Fig. 11 dargestellt, jedoch ohne Förderband 14.

Das Untertrum 520, auch Leertrum genannt, ist der untere Teil des Förderbands 14, der zurück zur Beladestelle läuft, nachdem das Material abgeworfen wurde. Es trägt keine Last außer dem Eigengewicht des Bands und eventuellen Resten von transportiertem Material, die nicht abgeworfen wurden. Die zumindest eine dritte und zumindest eine vierte Umlenkrollen sind vorzugsweise am Untertrum 520 angeordnet.

## Patentansprüche

1. Gleitschalungsfertiger (1), mit
- zumindest einem Maschinenrahmen (2),
- zumindest drei Fahreinrichtungen (4), die mit dem Maschinenrahmen (2) verbunden sind,
- zumindest einer Förderbandeinrichtung (6), die mit dem Maschinenrahmen (2) derart verbunden ist, dass die Förderbandeinrichtung (6) relativ zu dem Maschinenrahmen (2) zumindest um eine im Wesentlichen horizontale Achse und zumindest um eine im Wesentlichen vertikale Achse schwenkbar,
- wobei die Förderbandeinrichtung zumindest ein erstes Ende und zumindest ein zweites Ende aufweist, wobei die Förderbandeinrichtung zumindest eine Förderbandbasis und zumindest ein an der Förderbandbasis angeordnetes Förderband aufweist, wobei das Förderband um zumindest eine erste Umlenkrolle an dem ersten Ende der Förderbandeinrichtung und zumindest um eine zweite Umlenkrolle an einem zweiten Ende der Förderbandeinrichtung umläuft,
- zumindest ein erster Aktuator (22), der derart angeordnet und ausgebildet ist, dass die Förderbandeinrichtung (6) zumindest um die im Wesentlichen horizontale Achse (19) schwenkbar ist,
- zumindest ein zweiter Aktuator (24, 34), der derart angeordnet und ausgebildet ist, dass die Förderbandeinrichtung (6) zumindest um die im Wesentlichen vertikale Achse (36) schwenkbar ist und
**dadurch gekennzeichnet,**
**dass** zumindest eine Verstelleinrichtung vorgesehen ist, die derart ausgebildet ist, dass das erste und das zweite Ende der Förderbandeinrichtung in Längsrichtung der Förderbandeinrichtung verstellbar sind.

2. Gleitschalungsfertiger nach Anspruch 1, **dadurch gekennzeichnet, dass** die Verstelleinrichtung derart ausgebildet ist, dass das erste und das zweite Ende unabhängig voneinander in Längsrichtung der Förderbandeinrichtung verstellbar sind.

3. Gleitschalungsfertiger nach Anspruch 1 oder 2, **dadurch gekennzeichnet, dass** die Verstelleinrichtung derart ausgebildet ist, dass die Förderbandbasis und damit die Förderbandeinrichtung in Längsrichtung der Förderbandeinrichtung in Bezug zum Maschinenrahmen verstellbar ist und dass der Abstand zwischen der ersten Umlenkrolle am ersten Ende der Förderbandeinrichtung und der zweiten Umlenkrolle am zweiten Ende der Förderbandeinrichtung verstellbar ist.

4. Gleitschalungsfertiger nach einem der Ansprüche 1 bis 3, **dadurch gekennzeichnet, dass** die Verstelleinrichtung derart ausgebildet ist, die erste und/oder die zweite Umlenkrolle in Bezug zur Förderbandbasis verstellbar ist, so dass der Abstand zwischen der ersten Umlenkrolle am ersten Ende der Förderbandeinrichtung und/oder der zweiten Umlenkrolle am zweiten Ende der Förderbandeinrichtung verstellbar ist.

5. Gleitschalungsfertiger nach einem der Ansprüche 1 bis 4, **dadurch gekennzeichnet, dass** die Verstelleinrichtung zumindest einen ersten Verstellaktuator und zumindest einen zweiten Verstellaktuator aufweist,

6. Gleitschalungsfertiger (1) nach Anspruch 5, **dadurch gekennzeichnet, dass** der erste Verstellaktuator derart angeordnet und ausgebildet ist, dass die Förderbandbasis und damit die Förderbandeinrichtung in Längsrichtung der Förderbandeinrichtung in Bezug zum Maschinenrahmen mittels des ersten Verstellaktuators verstellbar ist, und wobei der zweite Verstellaktuator derart angeordnet und ausgebildet ist, dass der Abstand zwischen der ersten Umlenkrolle am ersten Ende der Förderbandeinrichtung und der zweiten Umlenkrolle am zweiten Ende der Förderbandeinrichtung mittels des zweiten Verstellaktuators verstellbar ist.

7. Gleitschalungsfertiger (1) nach Anspruche 6, **dadurch gekennzeichnet, dass** zweite Verstellaktuator derart angeordnet und ausgebildet ist, dass die ersten und/oder die zweite Umlenkrolle in Bezug zur Förderbandbasis verstellbar ist, so dass der Abstand zwischen der ersten Umlenkrolle am ersten Ende der Förderbandeinrichtung und/oder der zweiten Umlenkrolle am zweiten Ende der Förderbandeinrichtung verstellbar ist.

8. Gleitschalungsfertiger (1) nach einem der Ansprüche 1 bis 7, **dadurch gekennzeichnet, dass** zumindest eine Umlenkrolle angetrieben ist, so dass das um die Umlenkrollen umlaufende Förderband antreibbar ist.

9. Gleitschalungsfertiger (1) nach einem der Ansprüche 1 bis 8, **dadurch gekennzeichnet, dass** zusätzlich zu der ersten und zweiten Umlenkrolle mindestens eine dritte und mindestens eine vierte Umlenkrolle vorgesehen sind, um das Förderband verläuft, wobei mindestens die dritte Umlenkrolle derart verstellbar ist, dass das Förderband auch bei Verstellen des Abstandes zwischen der ersten Umlenkrolle der zweiten Umlenkrolle stets eine vorgegebene Spannung aufweist.

10. Gleitschalungsfertiger (1) nach einem der Ansprüche 1 bis 9, **dadurch gekennzeichnet, dass** der maximale Abstand zwischen der ersten und der zweiten Umlenkrolle gegenüber dem minimalen Abstand zwischen der ersten und zweiten Umlenkrolle 130% bis 200%, vorzugsweise 140% bis 160% beträgt.

11. Gleitschalungsfertiger (1) nach einem der Ansprüche 1 bis 10, **dadurch gekennzeichnet, dass** die zumindest einer Förderbandeinrichtung relativ zu dem Maschinenrahmen (2) entlang einer im Wesentlichen vertikalen Achse in der Höhe verstellbar ist.

12. Gleitschalungsfertiger (1) nach einem der Ansprüche 1 bis 11, **dadurch gekennzeichnet, dass** die zumindest einer Förderbandeinrichtung relativ zu dem Maschinenrahmen (2), vorzugsweise mittels einer Parallelogrammführung (106) in einer im Wesentlichen horizontalen Ebene bewegbar ist.

13. Verfahren zum Herstellen von Bodenbelägen oder Strukturen mit Hilfe von einem Gleitschalungsfertiger (1), der zumindest einen Maschinenrahmen (2) aufweist, mit dem zumindest eine Förderbandeinrichtung (6) verbunden ist, wobei die Förderbandeinrichtung (6) relativ zu dem Maschinenrahmen (2) zumindest um eine im Wesentlichen horizontale Achse und zumindest um eine im Wesentlichen vertikale Achse geschwenkt,
wobei die Förderbandeinrichtung zumindest ein erstes Ende und zumindest ein zweites Ende aufweist, wobei die Förderbandeinrichtung zumindest eine Förderbandbasis und zumindest ein an der Förderbandbasis angeordnetes Förderband aufweist, wobei das Förderband um zumindest eine erste Umlenkrolle an dem ersten Ende der Förderbandeinrichtung und zumindest um eine zweite Umlenkrolle an einem zweiten Ende der Förderbandeinrichtung umlaufen kann,
wobei zumindest ein erster Aktuator (22) die Förderbandeinrichtung (6) zumindest um die horizontale Achse schwenken kann,
zumindest ein zweiter Aktuator (24, 34) die Förderbandeinrichtung (6) zumindest um die vertikale Achse schwenken kann und
**dadurch gekennzeichnet,**
**dass** das erste und das zweite Ende der Förderbandeinrichtung in Längsrichtung des Förderbands mittels einer Verstelleinrichtung verstellt werden kann.

14. Verfahren nach Anspruch 13, **dadurch gekennzeichnet, dass** das erste und das zweite Ende unabhängig voneinander in Längsrichtung der Förderbandeinrichtung mittels der Verstelleinrichtung verstellt werden können.

15. Verfahren nach Anspruch 13 oder 14, **dadurch gekennzeichnet, dass** das erste und das zweite Ende zeitgleich oder nacheinander verstellt werden können.
